# FASCICULE DE BREVET EUROPEEN

(11) **EP 3 507 647 B1**
(45) Date de publication et mention de la délivrance du brevet: **05.11.2025**
(21) Numéro de dépôt: 17771487.0
(22) Date de dépôt: 30.08.2017
(51) Int. Cl.: G02C 7/02, G02C 7/06

(54) **MÉTHODE DE DÉTERMINATION D'UN ÉQUIPEMENT OPHTALMIQUE PROGRESSIF DE COMPENSATION VISUELLE PERSONNALISÉ POUR UN INDIVIDU**
METHODE ZUR BESTIMMUNG EINES GLEITSICHTGLASSES ZUM INDVIDUELLEN SEH-AUSGLEICH
METHOD OF DETERMINATION OF AN PROGRESSIVE OPHTHALMIC EQUIPMENT FOR COMPENSATING THE VISION OF AN INDIVIDUAL

(30) Priorité: 05.09.2016 FR 1658241
(43) Date de publication de la demande: 10.07.2019
(73) Titulaire: Essilor International, 94220 Charenton-le-Pont (FR)
(72) Inventeur: BONNIN, Thierry, 94220 Charenton Le Pont (FR); TRANVOUEZ-BERNARDIN, Delphine, 94220 Charenton-le-Pont (FR); CALIXTE, Laurent, 94220 Charenton-le-Pont (FR); POULAIN, Isabelle, 94220 Charenton-le-Pont (FR)
(74) Mandataire: Jacobacci Coralis Harle
(86) Numéro de dépôt international: PCT/FR2017/052309
(87) Numéro de publication internationale: WO 2018/042128

(56) Documents cités:
- EP-A1- 2 833 196
- EP-A2- 1 959 294
- US-A1- 2015 309 333
- US-A1- 2016 128 560
- US-B1- 6 199 983

## Description

### DOMAINE TECHNIQUE AUQUEL SE RAPPORTE L'INVENTION

La présente invention concerne de manière générale le domaine des équipements ophtalmiques progressif de compensation visuelle.

Elle concerne plus particulièrement une méthode de détermination d'un équipement ophtalmique progressif de compensation visuelle personnalisé pour un individu.

### ARRIERE-PLAN TECHNOLOGIQUE

Un équipement ophtalmique progressif de compensation visuelle comporte typiquement une monture de lunettes qui accueille deux lentilles ophtalmiques progressives.

Les lentilles ophtalmiques progressives permettent au porteur de bénéficier d'une compensation de puissance optique adaptée pour différentes distances de vision sans changer de lunettes. Elles peuvent également corriger d'autres défauts visuels, comme par exemple l'astigmatisme.

Une lentille ophtalmique progressive présente une puissance variable sur la surface de la lentille.

Il est par exemple prévu une première zone de vision pour la vision de loin présentant une première valeur de puissance moyenne, une seconde zone de vision pour la vision de près présentant une seconde valeur de puissance moyenne et, entre ces deux zones, une troisième zone de vision pour la vision intermédiaire, dont la courbure varie progressivement et qui est appelée couloir de progression.

La différence entre les première et seconde valeurs de puissance moyenne est égale à l'addition de puissance de la lentille.

Pour répondre au mieux aux besoins visuels d'un individu, il est nécessaire de personnaliser chaque lentille ophtalmique, notamment en fonction des valeurs de différents paramètres liés au porteur ou à son équipement, comprenant par exemple les défauts de la vision de l'individu à compenser, les caractéristiques géométriques de la monture choisie, et les caractéristiques du comportement visuel de l'individu.

Par exemple, l'addition de puissance de chaque lentille dépend de la compensation visuelle nécessaire pour chaque œil du porteur, en vision de loin et en vision de près. La position relative des zones de vision de près et de loin ainsi que les caractéristiques du couloir de progression dépendent entre autres choses des caractéristiques géométriques de la monture de lunettes choisie et du comportement visuel de l'individu, par exemple de sa propension à bouger plus ou moins les yeux pour regarder un élément de l'environnement en vision de loin ou de près.

A l'heure actuelle, les valeurs de ces différents paramètres sont mesurées au moment de la réalisation de l'équipement ophtalmique et prises en compte pour cette réalisation. En effet, les changements régulier d'opticien, l'absence de mesures antérieures pour la personnalisation des lentilles ophtalmiques, ou encore l'absence de mise en mémoire de ces mesures antérieures, empêchent la prise en compte des valeurs de ces paramètres mesurées précédemment.

Dans ce contexte, le document EP2833196 propose une méthode de contrôle d'un appareil de vision comprenant des lentilles programmables selon laquelle des données utilisateur sont enregistrées au court du temps pour améliorer la programmation des lentilles.

En conséquence, les valeurs de ces paramètres mesurées précédemment, par exemple lors de la réalisation d'équipement ophtalmique antérieurs, sont ignorées lors de la réalisation de l'équipement ophtalmique courant.

Or, la connaissance d'anciennes valeurs mesurées pour ces paramètres et, éventuellement, leur comparaison avec les nouvelles mesures, peuvent fournir des renseignements pertinent pour mieux adapter le nouvel équipement ophtalmique au porteur, ce qui n'est pas, ou difficilement, possible dans les processus actuel de détermination de l'équipement ophtalmique. Un autre document de l'art antérieur est US 6 199 983 B1.

### OBJET DE L'INVENTION

Afin de remédier à l'inconvénient précité de l'état de la technique, la présente invention propose une méthode de détermination d'un équipement ophtalmique progressif de compensation visuelle personnalisé pour un individu selon laquelle la valeur d'au moins un paramètre mesuré avant l'apparition de la presbytie de l'individu est prise en compte pour la détermination de l'équipement de compensation visuel courant.

Plus particulièrement, on propose selon l'invention une méthode de détermination d'un équipement ophtalmique progressif de compensation visuelle personnalisé pour un individu définie dans la revendication 1, selon laquelle on réalise entre autres les étapes suivantes :
a) dans une première phase d'acquisition de données, on détermine, à au moins un premier moment précédant l'apparition de la presbytie de cet individu, au moins une valeur d'au moins un paramètre individuel dudit individu, et on enregistre chaque valeur dudit paramètre individuel du porteur dans une base de données, en correspondance avec un indicateur temporel associé,
b) dans une deuxième étape de détermination de l'équipement ophtalmique progressif de compensation visuelle personnalisé, on détermine une valeur recherchée d'au moins un paramètre géométrique ou optique dudit équipement ophtalmique progressif de compensation visuelle, en tenant compte de ladite au moins une valeur dudit paramètre individuel déterminée à l'étape a) et de l'indicateur temporel associé.

D'autres caractéristiques non limitatives et avantageuses de la méthode conforme à l'invention sont énoncées aux revendications 2 à 12.

En outre, de manière optionnelle :
- dans une troisième étape c), on détermine en outre un service dans le domaine ophtalmique personnalisé pour l'individu en tenant compte d'au moins les premières, deuxième et troisième valeurs déterminées dudit paramètre individuel et des indicateurs temporels associés.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les étapes d'acquisitions de mesures et de détermination d'équipements ophtalmiques dans le temps,
- la figure 2 est un exemple de courbe montrant l'évolution dans le temps de la valeur de l'angle d'abaissement AY en degrés des yeux pour un individu,
- la figure 3 est un exemple de courbe montrant l'évolution dans le temps de la valeur du coefficient œil-tête COT de cet individu,
- la figure 4 est un exemple de courbe montrant l'évolution dans le temps de la valeur de la distance de lecture DL en centimètres de cet individu,
- la figure 5 est un exemple de courbe montrant l'évolution dans le temps de la dureté D (indice compris entre 1 et 10) d'un équipement ophtalmique réalisé pour un individu (points de forme losange), de l'appréciation associée de cet équipement par l'individu évaluée par celui-ci entre 1 et 10 (points de forme carré), d'un modèle d'évolution dans le temps de la dureté préférée de l'équipement statistiquement préférée par un individu (points de forme triangulaire), et de l'évolution dans le temps d'une dureté idéale théorique de l'équipement pour cet individu (points en forme de croix).

La méthode selon l'invention autorise le recueil, le stockage et l'exploitation de données relatives à un individu au cours du temps de façon à pouvoir lui fournir un équipement ophtalmique progressif et éventuellement un service répondant au mieux à ses besoins visuels.

En particulier, la méthode selon l'invention prévoit de recueillir des données concernant l'individu avant l'apparition de la presbytie, de les stocker et de les utiliser à un moment ultérieur, lors de la détermination d'un équipement ophtalmique progressif de compensation visuelle destiné entre autre, à compenser la presbytie de cet individu à ce moment ultérieur.

Plus précisément, la méthode selon l'invention permet la détermination d'un équipement ophtalmique progressif de compensation visuelle personnalisé pour un individu, par les étapes suivantes :
a) dans une première phase d'acquisition de données, on détermine, à au moins un premier moment précédant l'apparition de la presbytie de cet individu, au moins une valeur d'au moins un paramètre individuel dudit individu, et on enregistre cette valeur dudit paramètre individuel du porteur dans une base de données, en correspondance avec un indicateur temporel associé,
b) dans une deuxième étape de détermination de l'équipement ophtalmique progressif de compensation visuelle personnalisé, on détermine une valeur recherchée d'au moins un paramètre géométrique ou optique dudit équipement ophtalmique progressif de compensation visuelle, en tenant compte de ladite au moins une valeur dudit paramètre individuel déterminée à l'étape a) et de l'indicateur temporel associé.

Cette méthode est mise en œuvre grâce à une unité informatique adaptée à commander la réalisation ou réaliser les étapes a) et b).

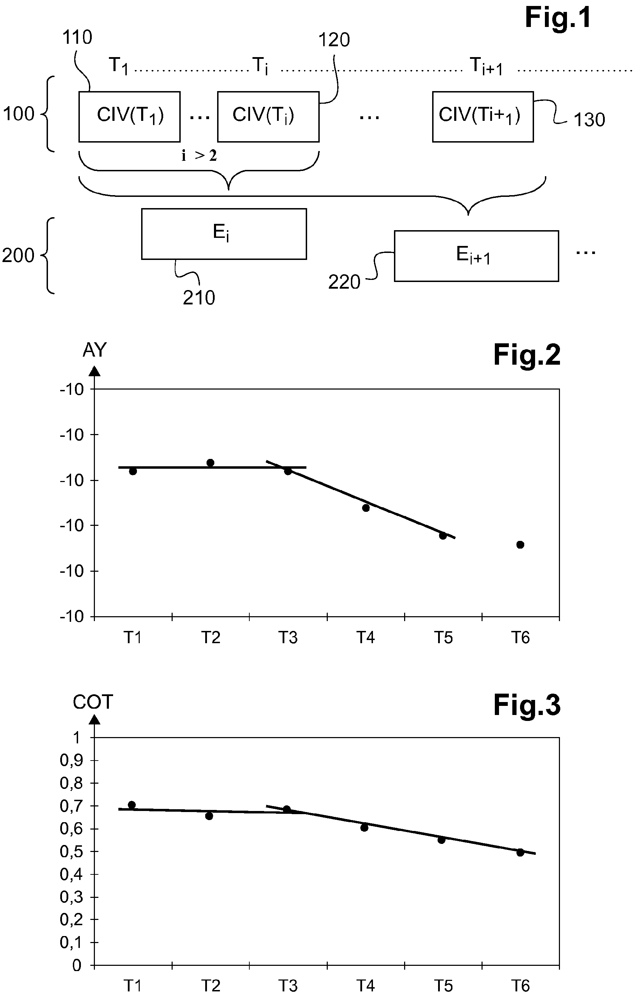

On a représenté schématiquement sur la figure 1 ces deux étapes : la ligne 100 correspond à l'étape a), tandis de la ligne 200 correspond à l'étape b).

La ligne 100 montre schématiquement les étapes 110, 120, 130 de recueil de données CIV(Ti) à différents moments Ti.

La ligne 200 montre schématiquement la réalisation de deux équipements ophtalmiques progressifs Ei, Ei+1 à deux moments Ti, Ti+1 correspondant aux blocs 210, 220 sur la base de données antérieures à chacun de ces moments.

### Etape a)

Cette étape correspond au recueil des données de l'individu.

Ce recueil a lieu à au moins un premier moment précédant l'apparition de la presbytie de cet individu.

La presbytie est un défaut visuel causé par une réduction de l'élasticité du cristallin survenant avec l'âge, qui entraîne une réduction progressive du pouvoir d'accommodation: la vision de près devient de plus en plus floue. Les individus presbytes ont tendance à éloigner la cible visuelle de leurs yeux de manière à la voir plus nette.

Les premiers signes de la presbytie apparaissent généralement lorsque l'accommodation maximale devient inférieure à 5 dioptries.

L'âge d'entrée dans la presbytie est en moyenne compris entre 40 et 45 ans.

Le premier moment Ti est donc situé de préférence avant que l'individu ait atteint l'âge de 40 ans, de préférence avant l'âge de 35 ans.

Ledit paramètre individuel comprend par exemple :
- un paramètre comportemental tel que par exemple un paramètre relatif au coefficient œil-tête, à l'angle d'abaissement du regard , à la distance de lecture, aux directions de regard pendant une tâche visuelle, à la posture pendant une tâche visuelle, aux zones d'usure d'une lentille portée ou aux activités pratiquées par l'individu.

Le coefficient œil-tête est un rapport entre l'étendue angulaire du mouvement de l'œil et l'étendue angulaire du mouvement de la tête lors d'une tâche visuelle impliquant de de regarder une cible visuelle.

Les zones d'usure de la lentille correspondent aux zones dans lesquelles sont situés les points d'intersection des directions de regard et de la lentille pendant une tâche visuelle prédéterminée.

La valeur d'au moins un de ces paramètres au moment Ti de la détermination est mis en mémoire dans une mémoire de stockage de l'unité informatique.

Elle est plus précisément mise en mémoire dans une base de données, en correspondance avec un indicateur temporel.

Cet indicateur temporel est représentatif du moment Ti de la détermination de la valeur du paramètre individuel. Ce peut être la valeur correspondante de l'âge de l'individu par exemple, ou encore la date du jour correspondant.

Le moment Ti peut ainsi correspondre à un instant donné ou à un intervalle de temps donné, tel qu'une journée, un mois ou une année donnée.

L'intervalle de temps correspondant au moment Ti est par exemple compris entre un instant matérialisé par la date et l'heure de la mesure, et une durée de six mois. En variante, l'intervalle de temps correspondant au moment Ti peut être supérieur ou égal à six mois, par exemple supérieur à deux ans, par exemple compris entre deux et dix ans.

En pratique, on détermine de préférence à l'étape a), la valeur de chaque paramètre individuel d'un ensemble de paramètre individuel Pi.

Les valeurs de cet ensemble de paramètres individuels mesurés au moment Ti constituent une carte d'identité visuelle (CIVi) de cet individu à ce moment Ti.

Cette carte d'identité visuelle (CIVi) peut comprendre des données et mesures :
- ponctuelles, enregistrées à un instant dudit moment Ti, comme le coefficient œil-tête, ou
- enregistrées sur une période dt donnée du moment Ti, par exemple la posture de l'individu pendant une tâche visuelle, la ou les directions de regard pendant une tâche visuelle, la distance entre les yeux de l'individu et une cible, les zones d'usure d'une lentille ophtalmique portée.

Chaque carte d'identité visuelle CIVi comporte ainsi les valeurs Pi(Ti) à Ti des paramètres individuels Pi.

L'ensemble des cartes d'identité visuelles constitue le dossier visuel de l'individu.

Chaque valeur de l'un desdits paramètres individuels déterminés dans ce dossier visuel peut être mis en mémoire dans une carte à puce ou être stockée par exemple sur un cloud spécifique.

Le dossier visuel de la personne pourra être mis à jour dès lors qu'une nouvel carte d'identité visuelle CIV sera déterminée, c'est-à-dire dès que la valeur d'au moins un paramètre individuel est remesuré et/ou dès que des paramètres complémentaires sont mesurés à un instant ultérieur.

La valeur de chaque paramètre individuel de la carte d'identité visuelle peut être déterminée de différentes manières, soit directement par un opérateur responsable de la mise en œuvre de la méthode selon l'invention, soit par l'individu lui-même. Cette détermination est réalisée soit sur place, chez un opticien, un ophtalmologiste ou un optométriste ou à distance, à domicile par exemple ou par un instrument de mesure embarqué sur la tête de l'individu.

Cette valeur peut être déterminée lors de la prise de mesure chez un opticien, un ophtalmologiste ou un optométriste, à l'aide d'outils dédiés comprenant différents appareils de mesure ou différents procédés de mesure. Cela est par exemple le cas lorsque le paramètre individuel est relatif au coefficient œil-tête, à la posture pendant une tâche visuelle donnée, à la ou les directions de regard pendant une tâche visuelle, à la distance entre les yeux de l'individu et une cible ou encore aux zones d'usure d'une lentille ophtalmique portée. Les résultats de ces déterminations sont transmis à l'unité informatique.

Elle peut également être déterminée grâce aux mesures réalisées par un ou plusieurs capteurs embarqués dans une monture de lunettes placée sur la tête de l'individu, tels qu'un dispositif de suivi du regard, un télémètre, un capteur de mesures inertielles.

Ces capteurs transmettent de préférence leurs mesures à l'unité informatique.

Cela est notamment le cas lorsque le paramètre individuel est relatif aux directions de regard, grâce au dispositif de suivi du regard, et lorsque le paramètre individuel est relatif à la distance entre les yeux et un point de visée, comme la distance de lecture par exemple, grâce au télémètre.

Elle peut également être déterminée par un test à distance, sur internet. L'individu peut alors par exemple réaliser ce test seul, à l'aide d'outils électroniques, optiques et informatiques courants et d'une interface accessible en ligne. Le résultat de ce test est alors transmis à l'unité informatique.

Cette valeur peut par exemple être déterminée à partir d'une ou plusieurs images capturées, soit par l'opticien, l'ophtalmologiste ou l'optométriste, soit par un dispositif de capture d'image embarqué sur la monture de lunette, soit à partir d'un questionnaire rempli par l'individu.

La carte d'identité visuelle de l'individu correspondant à un moment Ti peut éventuellement regrouper les valeurs de différents paramètres individuels déterminés selon différentes méthodes, à différents endroits, à différents instants ou différentes périodes du moment Ti.

A l'étape a), on détermine une pluralité de valeurs dudit paramètre individuel comprenant, d'une part, ladite valeur déterminée audit premier moment précédant l'apparition de la presbytie de l'individu, et, d'autre part, au moins une deuxième et, de préférence, une troisième valeurs dudit paramètre individuel déterminées à un deuxième et un troisième moments qui suivent ledit premier moment.

On enregistre cette pluralité de valeurs dudit paramètre individuel du porteur dans ladite base de données, chacune en correspondance avec l'indicateur temporel correspondant.

On détermine de préférence une pluralité de valeur de chaque paramètre individuel dudit ensemble de paramètres individuels.

On détermine alors une pluralité de carte d'identité visuelle CIV (Ti) de l'individu, correspondant chacune à un moment Ti différent.

On détermine au moins trois valeurs de chaque paramètre individuel, soit trois carte d'identité visuelle CIV(Ti) correspondant à trois moments différents.

Les premier, deuxième et troisième moments sont tels que les deuxième et troisième moments arrivent chronologiquement après le premier moment dans le temps.

L'un de ces trois moments, par exemple le troisième moment, peut correspondre au moment où l'individu souhaite acquérir un équipement ophtalmique progressif de compensation visuelle, après l'apparition d'un défaut visuel de presbytie.

Lesdits premier, deuxième et troisième moments différents sont par exemple séparés deux à deux d'au moins vingt quatre heures.

En pratique, lesdits premier, deuxième et troisième moments différents sont séparés entre eux d'un intervalle de temps supérieur ou égal à 24 heures.

Ces moments sont par exemple séparés d'un intervalle de temps compris entre 24 heures et 10 ans, par exemple égal à 24 heures, 48 heures, une semaine, un mois, 6 mois, un an, deux ans, trois ans, quatre ans, cinq ans, six ans, sept ans, huit ans, neuf ans ou dix ans.

Ces moments peuvent également être séparés d'un intervalle de temps supérieur à 10 ans, compris par exemple entre 10 et 30 ans.

Ces moments peuvent en particulier être séparés entre eux par des intervalles de temps différents.

De préférence, lesdits premier, deuxième et troisième moments différents sont espacés dans le temps d'une durée minimale définie en fonction du paramètre individuel considéré.

Par exemple, le paramètre individuel relatif à l'acuité visuelle de l'individu sera déterminé à des moments séparés d'au moins 6 mois. Par exemple, il peut être déterminé à des moments séparés entre eux d'au moins un an.

Le paramètre individuel relatif à la posture de l'individu pendant une tâche visuelle sera déterminé à des moments séparés d'au moins 1 an.

Le paramètre individuel relatif à la distance de lecture de l'individu sera déterminé à des moments séparés d'au moins 6 mois.

Les premier, deuxième et troisième moments peuvent être prédéterminés.

Les premier, deuxième et troisième moments peuvent également être choisis par l'individu dans des intervalles de temps prédéterminés proposés.

Les premier, deuxième et troisième moments peuvent être non prédéterminés. On peut prévoir par exemple alors de déterminer un moment prévu pour la détermination suivante de la valeur du paramètre individuel en fonction des valeurs du paramètre individuel déterminées précédemment.

Par exemple, une première valeur du paramètre individu ayant été déterminée au premier moment, le deuxième moment pour la détermination de la deuxième valeur de ce paramètre individuel peut être déterminé en fonction de ladite première valeur de ce paramètre individuel. Ensuite, le troisième moment pour la détermination de la troisième valeur de ce paramètre individuel peut être déterminé en fonction desdites première et deuxième valeurs de ce paramètre individuel. L'unité informatique peut par exemple être programmée à cet effet.

Le moment de la détermination suivante de la valeur du paramètre individuel peut également être déterminé par l'unité informatique en tenant compte d'un modèle d'évolution dans le temps de la valeur de ce paramètre individuel. Un tel modèle est par exemple un modèle statistique tel que décrit plus en détails plus loin.

Lorsqu'un tel modèle montre par exemple à un moment donné que la valeur du paramètre individuel considéré n'a pas dû évoluer depuis la dernière détermination, l'unité informatique est programmée pour reporter la détermination de la valeur de ce paramètre individuel.

Lorsqu'un tel modèle montre que statistiquement, la valeur du paramètre individuel considéré a dû varier significativement, par exemple d'un pourcentage seuil compris entre 10 et 50% depuis la dernière détermination, l'unité informatique est par exemple programmée pour informer l'individu qu'il serait utile de procéder à une nouvelle détermination de ce paramètre individuel.

En variante, à l'étape a), au moins une valeur de ladite pluralité de valeurs dudit paramètre individuel, correspondant à un moment donné, est estimée par un calcul en fonction de valeurs antérieures de ce paramètre individuel déterminées avant ce moment donné et d'un modèle d'évolution dans le temps de ce paramètre individuel. L'unité informatique est programmée à cet effet.

Ladite valeur du paramètre individuel est estimée en fonction des valeurs antérieures de ce paramètre individuel, c'est-à-dire en fonction des valeurs de ce paramètre individuel déterminées par mesure ou par calcul avant ce moment donné et en fonction dudit modèle d'évolution dans le temps de ce paramètre individuel.

Ce moment donné pour lequel la valeur du paramètre individuel est estimée par calcul peut être un moment passé, présent ou futur par rapport au moment où est réalisée cette estimation.

La valeur estimée du paramètre individuel peut alors permettre :
- soit de compléter les données disponibles sur l'individu, par exemple, compléter une carte d'identité visuel déterminée précédemment qui ne comporte pas de valeur de ce paramètre individuel,
- soit de déterminer la valeur actuelle de ce paramètre individuel pour faire l'économie d'une mesure,
- soit de prévoir la valeur future de ce paramètre individuel de manière à prédire l'évolution de la vision et/ou des besoins visuels de l'individu dans l'avenir.

Quoi qu'il en soit cette valeur estimée peut être prise en compte à l'étape b) comme les autres valeurs du paramètre individuel.

Le modèle d'évolution dans le temps de ce paramètre individuel est par exemple un modèle statistique d'évolution. Il peut s'agir par exemple de l'évolution avec l'âge de l'individu des valeurs moyennes du paramètre individuel, déterminée statistiquement pour une population donné d'individu. Il est mis en mémoire dans l'unité informatique.

En variante encore, au moins une valeur de ladite pluralité de valeurs dudit paramètre individuel, correspondant à un moment donné, est estimée par un calcul comme décrit précédemment et une autre valeur de ce paramètre individuel correspondant à ce même moment donné est déterminée par une mesure.

De préférence alors, chaque valeur du paramètre individuel est associée à un indicateur donnant la nature, estimée ou mesurée, de cette valeur.

Cet indicateur peut être pris en compte lors de l'étape a), pour les déterminations des valeurs ultérieures du paramètre individuel, ou lors de l'étape b).

Lesdites deux valeurs mesurées et estimées de ce paramètre individuel sont alors prises en compte à l'étape b) pour déterminer la valeur recherchée du paramètre géométrique ou optique dudit équipement ophtalmique de compensation visuelle. Cela sera expliqué plus en détails ultérieurement.

Selon encore une autre variante de la méthode selon l'invention, à l'étape a), on détermine également et en plus des étapes définies dans la revendication 1, une valeur d'au moins un paramètre de contrôle relatif à l'individu et on l'enregistre dans ladite base de données, en correspondance avec ladite au moins une valeur du paramètre individuel et l'indicateur temporel correspondant, et cette valeur du paramètre de contrôle est prise en compte à l'étape b) pour déterminer la valeur recherchée du paramètre géométrique ou optique dudit équipement ophtalmique de compensation visuelle. Cela sera expliqué plus en détails ultérieurement.

Ce paramètre de contrôle peut comprendre un paramètre physiologique et/ou un paramètre morphologique et/ou un paramètre comportemental et/ou un paramètre neuro-cognitif et/ou un paramètre psychologique et/ou un paramètre objectif ou subjectif relatif à un équipement ophtalmique de l'individu.

Il s'agit par exemple de l'un des paramètres individuels.

En outre, la liste des paramètres individuels dont la valeur est mise en mémoire pour former la carte d'identité visuelle de l'individu peut être déterminée en se basant sur une liste prédéterminée en fonction du temps, par exemple en fonction de l'âge de l'individu ou en fonction de la valeur de l'un des paramètres individuels, par exemple l'acuité visuelle ou la puissance réfractive d'un œil.

### Etape b)

L'étape b) concerne l'exploitation des données recueillies à l'étape a) de manière à réaliser un équipement ophtalmique progressif personnalisé, adapté aux besoins de la personne.

A cet effet, l'unité informatique détermine la valeur recherchée du paramètre géométrique ou optique dudit équipement ophtalmique progressif de compensation visuelle tel que défini dans la revendication 1, en tenant compte de ladite au moins une valeur dudit paramètre individuel déterminée à l'étape a) et de l'indicateur temporel associé.

Le paramètre géométrique ou optique de l'équipement de compensation visuelle déterminé comprend par exemple un paramètre géométrique ou optique d'une lentille ophtalmique de l'équipement et/ou un paramètre géométrique de la monture de l'équipement.

Le paramètre optique de la lentille comprend toute caractéristique de la lentille ophtalmique liée à son effet sur un ou des rayons lumineux en transmission à travers cette lentille ophtalmique ou en réflexion sur cette lentille ophtalmique.

En particulier, ce paramètre optique défini dans la revendication 1 peut être obtenu suite à la mesure de la puissance de la lentille ophtalmique ou son astigmatisme mesurés au frontofocomètre en un ou plusieurs points, la puissance de cette lentille ophtalmique ou son astigmatisme en conditions portée (avec l'ensemble œil, verre, environnement objet) en un ou plusieurs points ou dans une ou plusieurs directions de regard, toute autre grandeur calculable par tracé de rayon à travers la lentille ophtalmique, par exemple les aberrations optiques, le defocus, l'astigmatisme, la coma, ou l'acuité optique, le taux de transmission à travers le verre, les taux de réflexion sur ses surfaces, et toute valeur calculées à partir de ces taux de transmission et/ou de réflexion, par exemple le maximum d'astigmatisme ou le maximum de coma dans une zone.

Ce paramètre optique peut par ailleurs être déduit par calcul des caractéristiques géométriques de la lentille ophtalmique.

Le paramètre optique de la lentille ophtalmique est défini dans la revendication 1 et peut soit comprendre, soit être calculé à partir d' une ou plusieurs des grandeurs suivantes :
- sa puissance, son astigmatisme mesuré au frontofocomètre en un ou plusieurs points,
- sa puissance, son astigmatisme ou son astigmatisme résultant, égal à l'astigmatisme du verre auquel est soustrait l'astigmatisme de l'individu, en conditions portée (avec l'ensemble œil, verre, environnement objet) en un ou plusieurs points ou une ou plusieurs directions de regard,
- son acuité dans une direction de regard selon un modèle faisant intervenir la puissance et l'astigmatisme,

- un coefficient d'un des polynômes (par exemple Zernike) issu de la décomposition du front d'onde à travers la lentille ophtalmique,
- une déviation prismatique à travers la lentille ophtalmique,
- une déviation oculaire,
- toute autre grandeur calculable par tracé de rayon à travers la lentille ophtalmique,
- un maximum, un minimum, une variation ou un gradient des grandeurs précédentes sur un ensemble d'au moins deux points d'une surface de la lentille ophtalmique ou pour un ensemble d'au moins deux directions de regard de l'individu,
- un flux optique ou rétinien à travers la lentille ophtalmique,
- une position sur la lentille ophtalmique ou la direction de regard d'une zone de vision particulière, c'est-à-dire un emplacement où la puissance et/ou l'astigmatisme de la lentille ophtalmique correspond à la puissance réfractive du porteur en vision de loin ou en vision de près ou à une valeur particulière,
- une longueur de progression de x% à y% sur la lentille ophtalmique ou en direction de regard, c'est-à-dire la distance verticale entre une position sur la lentille ou une direction de regard pour laquelle la puissance vaut la puissance réfractive pour la vision de loin + x% * Add et une autre position ou direction de regard pour laquelle la puissance vaut la puissance réfractive pour la vision de loin + y% *Add, où Add représente l'addition de la lentille,
- un inset, c'est-à-dire une distance horizontale entre deux positions sur la lentille ophtalmique correspondant à deux puissances ou astigmatismes, par exemple, l'inset entre les points de la lentille correspondant aux vision de près et de loin qui est la distance horizontale entre la position correspondant à la puissance réfractive pour la vision de loin et la position correspondant à la puissance réfractive pour la vision de près,
- une étendue horizontale (aussi appelée largeur) ou verticale (aussi appelée hauteur) d'une zone de vision sur le verre ou en direction de regard, c'est-à-dire une distance entre deux positions ou deux directions de regard situées respectivement à une même hauteur ou à une même excentricité latérale et entre lesquelles la puissance et/ou l'astigmatisme résultant sont compris entre deux seuils ou inférieurs à un seuil,
- une hauteur d'une zone de vision sur la lentille ophtalmique ou en direction de regard, c'est-à-dire une distance entre deux positions ou directions de regard situées à une même excentricité latérale et entre lesquelles la variation de la puissance de la lentille ophtalmique est inférieure à une valeur seuil, par exemple inférieure à 0,25 dioptrie.

Le paramètre géométrique de la lentille défini dans la revendication 1 est donc obtenu à partir d'une ou de plusieurs caractéristiques liées à la géométrie du verre, ce qui peut donc inclure la géométrie de l'une de ses surfaces (avant ou arrière par exemple), la courbure ou base en un ou plusieurs points d'une des surfaces, la cinématique entre les surfaces du verres, l'indice du matériau de la lentille.

Le paramètre géométrique de la lentille ophtalmique peut alors comprendre une ou plusieurs des grandeurs suivantes :
- la distance horizontale ou verticale entre deux points de traçage/contrôle, par exemple la longueur de progression, c'est-à-dire la distance verticale entre point de vision de loin (VL) et point de vision de près (VP), et l'inset, c'est-à-dire la distance horizontale entre point VL et point VP.

En particulier, le paramètre géométrique ou optique de la lentille peut être relatif à l'addition, à la position des zones de vision de près et/ou de loin sur la lentille détourée, à la longueur de progression, c'est-à-dire la longueur du couloir de progression de chaque lentille, à l'inset de chaque lentille ou à la dureté de la lentille ophtalmique.

La croix de montage est un point de référence pour le positionnement de la lentille devant l'œil d'un porteur dont la position est prédéfinie par le fabriquant de la lentille.

La zone pour la vision de loin et la zone pour la vision de près sont séparées par une distance appelée longueur de progression.

La longueur de progression peut être définie comme la distance verticale entre la croix de montage et la position du point de référence en vision de près défini par le fabricant du verre.

Les directions horizontales et verticales de la lentille sont définies en fonction de la position de la lentille en conditions d'utilisation par le porteur, dans la monture choisie.

La longueur de progression de la lentille doit être ajustée en fonction de la hauteur de montage de la lentille ophtalmique.

La détermination de ce paramètre géométrique ou optique peut prendre en compte un critère prédéterminé. Ce critère peut par exemple être un critère de confort de l'individu, imposant que le nouvel équipement ophtalmique progressif déterminé par la méthode selon l'invention modifiant le moins possible la perception, le comportement, le confort, les habitudes visuelles du porteur à l'un desdits moments de détermination de la valeur des paramètres individuels (voir par exemple l'exemple 5).

À l'étape b), la valeur recherchée du paramètre géométrique est déterminée en tenant compte de ladite pluralité de valeurs du paramètre individuel, dont au moins deux des trois valeurs du paramètre individuel déterminée au premier, deuxième et troisième moments, de préférence les trois valeurs du paramètre individuel déterminée au premier, deuxième et troisième moments.

En d'autres termes, à l'étape b), la valeur recherchée du paramètre géométrique est déterminée en tenant compte d'au moins une valeur du paramètre individuel déterminée avant l'apparition de la presbytie, et au moins une valeur du paramètre individuel déterminée ultérieurement, après cette première détermination.

On prévoit qu'à l'étape b), on tient compte d'au moins une valeur du paramètre individuel déterminée après l'apparition de la presbytie.

Notamment, l'évolution temporelle desdites valeurs de la pluralité de valeurs du paramètre individuel déterminées à l'étape a) est prise en compte pour déterminer le paramètre géométrique ou optique à l'étape b). Cette évolution temporelle est déterminée pour chaque paramètre individuel, et correspond à une fonction d'évolution Fevol(Pi).

En effet, la connaissance de l'évolution des données du comportement visuel en même temps que l'évolution de la réfraction, de la presbytie, donnent des informations précieuses sur l'évolution des besoins de l'individu qui peuvent être utilisées pour personnaliser son nouvel équipement ophtalmique progressif.

En outre, pour chaque paramètre individuel Pi, un facteur de pondération Fpond(Pi(Ti)) peut être déterminé pour chaque valeur déterminée à un moment Ti.

De préférence, l'équipement ophtalmique progressif Ei est alors déterminé en fonction des valeurs déterminées des paramètres individuels aux différents moments Ti, par exemple pour N moments, i = 1 à N, des facteurs de pondération Fpond (Pi(Ti)), pour i = 1 à N correspondant et de l'évolution temporelle Fevol(Pi), pour i = 1 à N de ce paramètre individuel correspondante.

De préférence, lorsque la valeur d'un paramètre de contrôle a été enregistrée à l'étape a) en correspondance avec chaque valeur du paramètre individuel, à l'étape b), l'unité informatique est programmée pour pondérer l'importance de ladite au moins une valeur du paramètre individuel déterminé à l'étape a) en fonction de la valeur du paramètre de contrôle associée.

En particulier, à l'étape b), l'unité informatique peut être programmée pour pondérer l'importance de chaque valeur dudit paramètre individuel déterminée à l'étape a) en fonction de l'évolution dans le temps de ce paramètre de contrôle.

Il ne serait en effet par exemple pas pertinent de prendre en compte un coefficient œil-tête enregistré lorsque l'individu avait 25 ans pour optimiser ses lentilles ophtalmiques 20 ans plus tard si celui-ci a depuis perdu en dynamisme/mobilité à cause d'un accident ou du vieillissement.

Ainsi, par exemple, si un paramètre de contrôle relatif au dynamisme et/ou à la mobilité de l'individu est enregistré à chaque moment de détermination, et que son évolution montre une baisse du dynamisme et/ou de la mobilité, les poids des paramètres liés à la vision en mouvement pris en compte dans la détermination du paramètre géométrique ou optique de l'équipement ophtalmique progressif recherché sont diminués par rapport aux poids des autres paramètres individuels, de manière à diminuer leur influence dans la détermination du paramètre géométrique ou optique recherché.

De manière optionnelle, on peut prévoir que l'individu puisse avoir accès à ses données enregistrées et à leur évolution au cours du temps, puisse les visualiser via un site web ou une application, comparer ses données avec les moyennes des autres individus.

On peut envisager que l'individu ait accès à des modèles d'évolution des paramètres individuels pour l'aider à en comprendre l'évolution. Cela pourrait l'encourager à renseigner son appréciation de son équipement actuel.

En outre, grâce à la méthode selon l'invention, il est également possible de fournir un service dans le domaine ophtalmique adapté à la personne, notamment en planifiant des actions en relation avec la « santé visuelle » de la personne. Ces derniers points sont réalisés grâce à une prédiction de l'évolution de la vision de la personne.

Il s'agit alors d'estimer, comme mentionné précédemment, la valeur du ou des paramètres individuels pour un moment Ti futur. En fonction de cette valeur future estimée, une modification de l'équipement ophtalmique progressif ou une nouvelle détermination des paramètres individuels peut être déterminée. L'individu en est informé.

Par exemple, l'individu peut alors consulter dans son espace personnel des recommandations concernant un passage chez l'opticien ou l'ophtalmologiste, ainsi que des propositions de nouvel équipement ou d'équipement mieux adapté, avec des explications des différences entre équipements adapté à ses données.

Différents exemples de mise en œuvre vont maintenant être décrits afin d'illustrer l'invention. Ces exemples sont non-limitatifs.

### Exemple 1

Chaque individu présente un comportement visuel naturel qui lui est propre. L'apparition de la presbytie va venir perturber progressivement ce comportement visuel naturel, rendant impossible la détermination de ce comportement visuel naturel après l'apparition de la presbytie.

Or, il est important de connaître ce comportement visuel naturel pour sélectionner ou personnaliser au mieux l'équipement ophtalmique progressif de l'individu.

Dans cet exemple, chaque carte d'identité visuelle comporte les valeurs au moment de sa détermination des paramètres individuels suivants :
- angle d'abaissement du regard, c'est-à-dire angle entre la direction de regard à travers la lentille et une direction de regard de référence correspondant à la direction de regard primaire de l'individu lorsqu'il regarde droit devant à l'infini, à travers la croix de montage donc avec une lentille progressive,
- coefficient œil-tête,
- distance de lecture.

Les valeurs de ces trois paramètres individuels sont mesurées tous les 4 ans à partir des 25 ans de l'individu, ce qui correspond ici au premier moment T1.

La presbytie de l'individu commence ici à se manifester à l'âge de 37 ans au moment T4.

On a donc déterminé trois cartes d'identité visuelle à T1, T2, T3 avant l'apparition de la presbytie et deux cartes d'identité visuelle à T5 et T6 après l'apparition de la presbytie.

Les résultats de ces mesures sont représentées dans le tableau 1 suivants, en correspondance avec l'indicateur temporel qui est ici l'âge de l'individu à chaque moment Ti.

Ces résultats permettent de déterminer l'évolution temporelle de chaque paramètre individuel. Cette évolution est représentée graphiquement sur les graphes des figures 2, 3 et 4.

L'évolution temporelle de chacun de ces trois paramètres individuels met en évidence deux phases dans la vie de l'individu.

**Tableau 1**

| | T1 | T2 | T3 | T4 | T5 | T6 |
|---|---|---|---|---|---|---|
| Age | 25 | 29 | 33 | 37 | 41 | 45 |
| Abaissement œil AY (°) | -19 | -18 | -19 | -23 | -26 | -27 |
| Coeff Œil-Tête COT | 0,7 | 0,65 | 0,68 | 0,6 | 0,55 | 0,5 |
| Distance de lecture DL (cm) | 35 | 37 | 36 | 40 | 44 | 45 |
| CIV | CIV(T1) | CIV(T2) | CIV(T3) | CIV(T4) | CIV(T5) | CIV(T6) |

Dans une première phase, le comportement de l'individu, caractérisé par l'abaissement de son regard, le coefficient œil-tête et la distance de lecture, est assez stable : les valeurs de ces trois paramètres varient peu dans le temps (voir figures 2, 3 et 4). Cette première phase correspond aux mesures des moments T1, T2 et T3.

Dans une deuxième phase, on observe une évolution du comportement de l'individu. Cette deuxième phase correspond aux mesures réalisées aux moments T4, T5 et T6. Cette deuxième phase correspond à l'installation du défaut visuelle de la presbytie. L'évolution temporelle du comportement de l'individu montre une augmentation, en valeur absolue, de l'angle d'abaissement du regard, une légère baisse du coefficient œil-tête et une augmentation marquée de la distance de lecture.

Les valeurs des paramètres individuels recueillies aux moments T1, T2 et T3 peuvent être considérées comme des valeurs de référence représentatives du comportement naturel de l'individu avant l'arrivée de la presbytie.

Le premier équipement ophtalmique progressif est ici réalisé au moment T6.

Grâce à la méthode selon l'invention, pour la détermination des paramètres géométriques et/ou optique de l'équipement ophtalmique progressif au moment T6, les valeurs de ces paramètres individuels déterminés antérieurement au moment T6 sont prises en compte.

Les valeurs des paramètres individuels relatifs à l'abaissement de regard et à la distance de lecture aux instants T1, T2 et T3 sont utilisées pour ajuster la zone de vision de près de la lentille ophtalmique progressive : addition, longueur de progression, insets... de façon à assurer à l'individu une posture de confort avec ses verres progressifs proche de la posture de confort de l'individu avant l'arrivée de la presbytie.

Par contre, l'évolution observée au niveau du coefficient œil-tête n'est pas liée au déficit de netteté en vision de près engendré par la presbytie mais plus vraisemblablement à une évolution liée à l'âge.

Le choix de la dureté de la lentille ophtalmique sera donc effectué à partir d'une combinaison des mesures effectuées de T1 à T6 correspondant par exemple à la moyenne des mesures de T1 à T6.

### Exemple 2

Dans ce deuxième exemple non-couvert par le jeu de revendications, un individu presbyte souhaite faire réaliser un équipement ophtalmique progressif de compensation optique au moment T4 actuel. A cet effet, une carte d'identité visuelle CIV comportant les valeurs des paramètres individuels suivants :
- réfraction de chaque œil : puissance sphérique SPHi, cylindrique, orientation de l'axe du cylindre, addition ADDi,
- caractéristiques de l'équipement ophtalmique progressif Ei porté par l'individu à Ti : puissance en vision de près et de loin et dureté,
- appréciation par l'individu de son équipement ophtalmique à Ti pour la période [Ti-1 ; Ti[.

La dureté d'une lentille ophtalmique est une valeur représentative du compromis effectué entre l'augmentation souhaitable du champ de vision de l'individu à travers la lentille ophtalmique, donc une augmentation des dimensions des zones de vision de près et/ou loin, et la limitation des effets de distorsion périphériques liées aux aberrations optiques de la lentille ophtalmique.

Une dureté élevée indique alors un champ de vision large mais des effets de distorsion périphérique de l'image vue à travers la lentille plus important que pour une dureté faible, qui indique un champ de vision moins large, mais des effets de distorsion périphériques réduits.

Ici, la dureté de la lentille est déterminée en fonction du gradient de puissance de cette lentille, qui est comparé aux gradients de puissance déterminés pour les lentilles d'une base de données pré-établie. Une dureté de 10 est attribuée à la lentille présentant le plus fort gradient de puissance de la base de données et une dureté de 0 est attribuée à la lentille présentant le plus faible gradient.

Plusieurs cartes d'identité visuelle CIV de cet individu, comportant chacune les valeurs de tous ces paramètres individuels ont été enregistrées à des moments T1, T2 et T3 antérieurs au moment T4.

Le tableau 2 donne les principales données de ces cartes d'identité visuelles.

**Tableau 2**

| CIV(Ti) | Ti | SPHi | ADDi | Dureté (0-10) | Appréciation (entre 0 et 10) |
|---|---|---|---|---|---|
| CIV(T1) | T1 | -4 | 0,75 | 0,5 | 8 |
| CIV(T2) | T2 | -4 | 1,25 | 1 | 8 |
| CIV(T3) | T3 | -4 | 1,75 | 1,5 | 6 |
| CIV(T4) | T4 | -4 | 2,5 | à déterminer | à déterminer |

Jusqu'au moment T4, l'individu a été équipé avec un équipement ophtalmique progressif de même type, adapté à chaque fois à sa réfraction. A chaque moment Ti, l'équipement de l'individu comprend une lentille ophtalmique progressive dont la dureté est indiquée dans le tableau 2.

L'appréciation de cet équipement donné par une note sur dix indiqué par l'individu était bonne au moment T1 et T2, avec une note de 8/10.

Au moment T3, l'individu est moins satisfait de son équipement E3 car son appréciation indique une note de 6/10 seulement.

On utilise alors un modèle représentant la dureté moyenne préférée par les sujets presbytes porteurs d'équipement ophtalmique progressif de compensation visuelle en fonction de leur âge.

Ce modèle est déterminé statistiquement en recueillant les appréciations des utilisateurs sur leur équipement.

Selon ce modèle, les individus presbytes depuis peu de temps, c'est-à-dire par exemple ceux dont l'équipement présente une addition inférieure ou égale à 1,5 dioptries, préfèrent des équipements munis de lentilles progressives dont la dureté est faible et les individus presbytes depuis plus longtemps préfèrent des lentilles progressives dont la dureté est plus élevée.

En d'autres termes, la dureté préférée par un individu pour ses lentilles ophtalmiques progressives augmente avec l'ancienneté de la presbytie de cet individu.

Le tableau 3 donne les valeurs statistiques de la dureté préférée au moment Ti correspondant du tableau 2.

**Tableau 3**

| Ti | Dureté (0-10) | Dureté moyenne préférée (0-10) | Dureté théorique idéale (0-10) |
|---|---|---|---|
| T1 | 0.5 | 1 | 0,5 |
| T2 | 1 | 1,5 | 1 |
| T3 | 1,5 | 3,5 | 2,5 |
| T4 | à déterminer | 7,5 | 6 |

On constate en effet que l'appréciation de l'individu était bonne tant que la dureté de son équipement était proche de la dureté moyenne préférée, comme cela est le cas aux moments T1 et T2, mais que l'appréciation se dégrade lorsque la dureté de l'équipement de l'individu s'éloigne de cette valeur moyenne préférée (cas du moment T3).

Alors, l'unité informatique est programmée pour déterminer la caractéristique optique de dureté de l'équipement ophtalmique E4 en fonction des valeurs au moment T4 des paramètres de réfraction de l'individu et de la valeur du modèle de dureté moyenne préférée au moment T4.

Plus précisément, à cet effet, l'unité informatique est programmée pour estimer à chaque moment Ti une valeur théorique de la dureté idéale de la lentille de l'équipement ophtalmique Ei de l'individu.

Cette valeur estimée de la dureté tient compte des valeurs de dureté des équipements Ei déterminées et de leur appréciation, ainsi que du modèle de dureté préférée.

La valeur estimée de la dureté idéale pour le temps T4 est alors appliquée au nouvel équipement ophtalmique E4 déterminé au moment T4.

L'équipement E4 est alors adapté aux valeurs actuelles au moment T4 de la réfraction de l'individu et tient compte de l'évolution de ses besoins et préférence dans le temps.

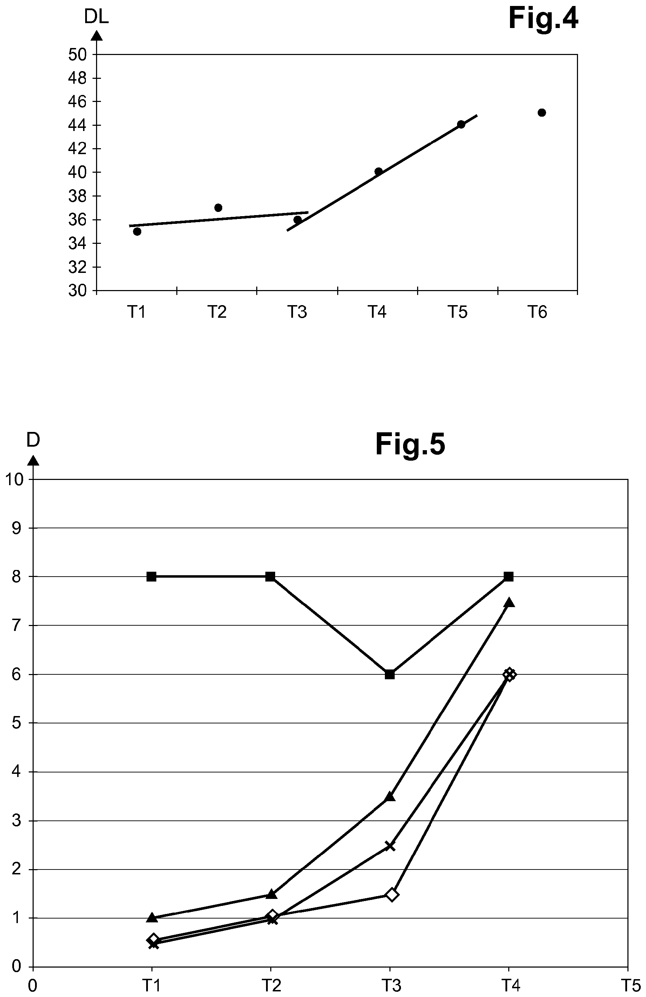

Cette évolution est schématisée sur la figure 5, sur laquelle on a représenté l'évolution dans le temps de la dureté de l'équipement ophtalmique Ei réalisé pour un individu (points de forme losange), de l'appréciation associée de cet équipement Ei par l'individu, évaluée par celui-ci entre 1 et 10 (points de forme carré), du modèle d'évolution dans le temps de la dureté statistiquement préférée par un individu (points de forme triangulaire), et de la dureté idéale estimée de l'équipement pour cet individu (points en forme de croix).

La dureté préférée est la courbe à suivre en moyenne.

On constate dans cet exemple que l'individu est très satisfait de son équipement aux moments T1 et T2 puisque l'appréciation associée aux équipements à ces moments présente une note de 8 sur 10.

La dureté de l'équipement porté par l'individu aux moments T1 et T2 suit la courbe de dureté préférée.

Au moment T3, la dureté de l'équipement porté s'écarte de la dureté préférée et la satisfaction de l'individu baisse, puisque son appréciation de l'équipement est représentée par une note de 6 sur 10.

Pour les moments T3 et T4, on construit la courbe de dureté idéale estimée pour ce porteur (points en forme de croix) en s'appuyant sur les duretés appréciées aux moments T1 et T2, et en suivant une évolution similaire à la courbe du modèle de dureté préférée (points en forme de triangle), c'est-à-dire une évolution sensiblement parallèle à cette courbe de dureté préférée, passant par les duretés de l'équipement porté à T1 et T2.

On détermine alors une dureté idéale théorique de l'équipement au moment T3 (qui diffère de la dureté de l'équipement réellement porté au moment T3) et une dureté idéale théorique pour l'équipement au moment T4 (point en forme de losange) égale à 6. Cette dernière valeur est retenue pour le nouvel équipement réalisé au moment T4 (point en forme de croix à T4).

La dureté de l'équipement E4 se rapprochant de la dureté préférée au moment T4, l'appréciation de l'équipement E4 attendue devrait être bonne. Elle est par exemple de 8/10.

### Exemple 3

Dans cet exemple 3, la valeur d'au moins un paramètre de contrôle est déterminée à chaque détermination d'une carte d'identité visuelle.

En pratique, il s'agit ici d'une pluralité de paramètres de contrôle. Ils sont par exemple relatifs à l'activité de cet individu. Il s'agit par exemple de paramètre relatifs à la fréquence de la pratique de certains sports, à la fréquence de la conduite automobile, à la pratique d'activité extérieure...

L'activité pratiquée par l'individu change tout au long de sa vie, car son style de vie et ses besoins changent mais aussi parce que certaines activités ne peuvent plus être pratiquées ou parce que leur pratique est modifiées vers une version moins active.

Dans ce cas, ce type d'information est crucial à prendre en compte car elle pondère l'importance et le poids d'un ou plusieurs paramètres individuels.

Dans le cas d'un individu ayant enregistré plusieurs cartes d'identité visuelle dans son dossier visuel, la prise en compte de celles-ci ayant données lieu à la réalisation à chaque fois d'un d'équipement ophtalmique progressif.

Au moment Ti actuel de la détermination d'une nouvelle carte d'identité visuelle CIV(Ti), cet individu présente un âge avancé et ne peut plus conduire son véhicule, limite ses déplacements et de fait passe plus de temps sur des activités statiques.

La prise en compte des paramètres individuels issus des cartes d'identité précédentes ayant un lien avec la vision en mouvement perdent alors de l'importance dans la mesure où ils ne sont plus représentatifs du futur de ce porteur.

Ainsi, les paramètres individuels tels que le coefficient œil-tête, la vision en mouvement, la perception extra-fovéale, la coordination oculo-motrice perdent de l'importance voir même, sont exclus de la prise en compte.

Leur influence et par la même leur poids dans le choix d'un équipement devient faible voir inexistant.

En revanche, le poids des paramètres individuels relatifs à la vision de près, comme l'abaissement de regard, les champs perçus, la distance de lecture, la vision intermédiaire, la posture en statique (lecture) devient plus important.

Ainsi, l'évolution dans le temps des paramètres de contrôle relatifs à l'activité de l'individu, ou une ou plusieurs valeurs de ces paramètres de contrôle déterminées au moment actuel ou à un moment précédent, permettent de déterminer le poids de chaque paramètre individuel dans la détermination du paramètre optique et/ou géométrique de l'équipement ophtalmique actuel.

Des facteurs de pondération de chaque paramètre individuel sont déterminés en fonction de cette évolution dans le temps et/ou de ces valeurs.

### Exemple 4

Dans cet exemple non couvert par le jeu de revendications, un individu presbyte bénéficie de l'enregistrement de plusieurs cartes d'identité visuelle aux moments T1, T2, T3, T4 passés.

Au moment actuel T5, une nouvelle carte d'identité visuelle est enregistrée.

Chaque carte d'identité visuelle comprend ici les valeurs de réfraction complète de l'individu : puissance sphérique et cylindrique, orientation de l'axe du cylindre et addition à Ti, les caractéristiques de l'équipement ophtalmique Ei porté, notamment sa dureté, ainsi qu'une mesure de coefficient œil-tête COTi de l'individu au moment Ti.

Le coefficient œil-tête COTi de l'individu est stable entre T1 et T4. Retraité depuis peu il s'est progressivement remis à pratiquer des activités sportives, d'où un changement de coefficient œil-tête constaté au moment T5.

Le tableau 4 résume les données recueillies pour cet individu.

**Tableau 4**

| **CIV(Ti)** | **Ti** | **SPHi** | **ADDi** | **COTi** | **Dureté associée au COT Dcot** | **Dureté moyenne préférée Dage** | **Moyenne (D_{cot},D_{age})** | **Dureté finale Equipement Ei** |
|---|---|---|---|---|---|---|---|---|
| CIV(T1) | T1 | -3 | 0,75 | 0,18 | 8,2 | 0,5 | 4,4 | 4,4 |
| CIV(T2) | T2 | -3 | 1,25 | 0,24 | 7,6 | 1 | 4,3 | 4,3 |
| CIV(T3) | T3 | -3 | 1,75 | 0,2 | 8 | 2,5 | 5,3 | 5,3 |
| CIV(T4) | T4 | -3 | 2,00 | 0,23 | 7,7 | 3,5 | 5,6 | **5,6** |
| CIV(T5) | T5 | -3 | 2,25 | 0,62 | **3,8** | 4,5 | 4,2 | **à déterminer** |

Pour chaque moment Ti, à chaque coefficient œil-tête COTi mesuré est associé une dureté associée au coefficient œil-têt Dcot(Ti) déterminée par un modèle en fonction du coefficient œil-tête. Ce modèle est déterminé statistiquement en recueillant les appréciations d'un échantillon d'utilisateurs présentant des COT couvrant l'intervalle de valeurs entre 0 et 1 et ayant chacun comparé des équipements de duretés différentes.

La dureté Dage(Ti) préférée de l'équipement Ei pour un individu d'âge donné est estimée comme mentionnée précédemment à partir d'un modèle de dureté lié à l'âge. Ce modèle est déterminé statistiquement en recueillant les appréciations d'un échantillon d'utilisateurs âgés entre 25 et 80 ans ayant chacun comparé des équipements de duretés différentes.

La combinaison de ces deux valeurs estimées de dureté permet de déterminer la dureté du verre à fournir à l'individu pour un confort de vision optimal.

Ici, cette combinaison est réalisée par le calcul de la moyenne de ces deux valeurs estimées de dureté.

C'est le calcul qui a été effectué aux moments T1, T2, T3 pour réaliser les équipements E1, E2, E3.

Aux moments T3 et T4, grâce à l'ensemble des valeurs mesurées des paramètres individuels et au modèle de dureté moyenne préférée en fonction de l'âge, il est également possible de prédire la dureté qui serait optimale pour l'individu respectivement aux moments T4 et T5.

Ces valeurs prédites dont calculées en déterminant une première moyenne des valeurs de dureté associée au coefficient œil-tête des cartes d'identité visuelles précédentes, puis en déterminant une deuxième moyenne de cette première moyenne avec la valeur de dureté moyenne préférée à l'âge correspondant au moment actuel T4 ou T5.

Soit ici : Dureté optimale prédite pour E4 Dprédite(T4) = ((8,2 + 7,6 + 8)/3 + 3,5)/2 = 5,7 et Dureté optimale prédite pour E5 Dprédite(T5) = ((8,2 + 7,6 + 8 + 7,7)/4 + 4,5)/2 = 6,2.

Ces valeurs sont indiquées dans la dernière colonne du tableau 5 ci-dessous, qui reprend en partie les données du tableau 4.

**Tableau 5**

| **CIV(Ti)** | **Ti** | **Dureté associée au COT Dcot** | **Dureté moyenne préférée Daqe** | **Moyenne (Dcot,Dage)** | **Dureté finale Equipement Ei D** | **Dureté optimale prédite pour Ei Dprédite** |
|---|---|---|---|---|---|---|
| CIV(T1) | T1 | 8,2 | 0,5 | 4,4 | 4,4 | - |
| CIV(T2) | T2 | 7,6 | 1 | 4,3 | 4,3 | - |
| CIV(T3) | T3 | 8 | 2,5 | 5,3 | 5,3 | - |
| CIV(T4) | T4 | 7,7 | 3,5 | 5,6 | 5,6 | 5,7 |
| CIV(T5) | T5 | 3,8 | 4,5 | 4,2 | à déterminer | 6,2 |

Au moment T4, la valeur de la dureté finale de l'équipement, choisie égale à la moyenne (5,6) de la dureté préférée selon l'âge et de la dureté associée au coefficient œil-tête était très proche de la valeur de la dureté optimale prédite (5,7). Un équipement présentant une dureté égale à 5,6 a été choisi pour l'individu.

Au moment T5, la moyenne (4,2) de la dureté préférée selon l'âgé et de la dureté associée au coefficient œil-tête est éloignée de la valeur prédite de 6,2.

Dans ce cas, pour éviter un changement trop brutal de dureté de l'équipement, des lentilles ophtalmiques de dureté intermédiaire entre ces 2 valeurs sont choisies : une dureté égale à 5.2 est déterminée.

Plus précisément, la fonction de détermination de la dureté des lentilles ophtalmiques finales de l'équipement Ei peut s'écrire ici: D(Ti) = Moyenne (Dage(Ti), Dcot(Ti)) si | Dprédite(Ti) - Moyenne (Dage(Ti),Dcot (Ti)) | < 1 et D(Ti) = Moyenne (Dage(Ti), Dcot(Ti), Dprédite(Ti)) si | Dprédite(Ti) - Moyenne (Dage(Ti), Dcot(Ti)) | > ou égale 1.

Ainsi, si l'écart entre la valeur de dureté prédite au moment Ti et la moyenne de la dureté préférée selon l'âge et de la dureté associée au coefficient œil-tête est inférieur à 1, la valeur de la moyenne de la dureté préférée selon l'âge et de la dureté associée au coefficient œil-tête est retenue pour la dureté finale de l'équipement Ei.

Si l'écart entre la valeur de dureté prédite au moment Ti et la moyenne de la dureté préférée selon l'âge et de la dureté associée au coefficient œil-tête est supérieur ou égal à 1, la dureté finale de l'équipement Ei est prise égale à la moyenne de la dureté préférée selon l'âge, de la dureté associée au coefficient œil-tête et de la dureté prédite, afin de tenir compte de cette valeur prédite.

Ce choix prend en compte l'évolution des besoins de l'individu dans le temps (changement de coefficient œil-tête dû à un changement de style de vie) tout en évitant un changement trop brutal de dureté pour faciliter son adaptation au nouvel équipement.

### Exemple 5

Dans cet exemple non couvert pas le jeu de revendications, avant la presbytie, l'individu porte une petite monture, c'est-à-dire dont la largeur, hauteur, largeur de façade sont inférieures à des valeurs seuils correspondantes. Il est donc habitué à une petite taille de champ de vision.

Les dimensions de cette ancienne monture sont déterminées lors de l'étape a) et constituent les paramètres individuels.

A l'arrivée de la presbytie, il est préférable de ne pas trop modifier sa taille de champ de vision.

Ainsi, à l'étape b), on détermine les dimensions de la nouvelle monture de l'individu de telle sorte que cette nouvelle monture soit juste assez grande pour pouvoir accueillir les lentilles progressives adaptées à la vision de l'individu, et restent le plus proches possible des dimensions de l'ancienne monture.

## Revendications

1. Méthode, mise en œuvre grâce à une unité informatique, de détermination d'un équipement ophtalmique progressif de compensation visuelle personnalisé pour un individu, ledit équipement ophtalmique progressif étant destinée à être fabriqué, selon laquelle on réalise les étapes suivantes :
a) dans une première phase d'acquisition de données, on détermine une pluralité de valeurs d'au moins un paramètre individuel dudit individu comprenant, au moins une valeur dudit paramètre individuel déterminée à au moins un premier moment précédant l'apparition de la presbytie de cet individu, et au moins une deuxième et une troisième valeurs dudit paramètre individuel déterminées à un deuxième et un troisième moments qui suivent ledit premier moment, au moins un parmi le deuxième moment et le troisième moment étant après l'apparition de la presbytie de cet individu, et on enregistre chaque valeur dudit paramètre individuel du porteur de cette pluralité de valeurs dans une base de données, chacune en correspondance avec un indicateur temporel associé,
b) dans une deuxième étape de détermination de l'équipement ophtalmique progressif de compensation visuelle personnalisé, on détermine une valeur recherchée d'au moins un paramètre géométrique ou optique dudit équipement ophtalmique progressif de compensation visuelle, en tenant compte de ladite au moins une valeur dudit paramètre individuel déterminée à l'étape a) et de l'indicateur temporel associé et en tenant compte de l'évolution temporelle desdites valeurs de la pluralité de valeurs du paramètre individuel déterminées à l'étape a),
à l'étape a), ledit paramètre individuel comprend un paramètre comportemental choisi parmi : un coefficient œil-tête, un angle d'abaissement du regard, une distance de lecture, une direction de regard pendant une tâche visuelle, une posture pendant une tâche visuelle, une zone d'usure d'une lentille portée ou à une activité pratiquée par l'individu,
à l'étape b), ledit paramètre géométrique ou optique est relatif à une lentille ophtalmique progressive de l'équipement ophtalmique progressif et est choisi parmi : une addition de la lentille, une position d'une de vision de près et/ou de loin sur la lentille détourée, une longueur de progression de la lentille, un inset de la lentille ou une dureté de la lentille.

2. Méthode selon la revendication 1, selon laquelle, à l'étape a), lesdits premier, deuxième et troisième moments différents sont séparés deux à deux d'au moins vingt quatre heures.

3. Méthode selon l'une des revendications 1 et 2, selon laquelle lesdits premier, deuxième et troisième moments différents sont espacés dans le temps d'une durée définie en fonction du paramètre individuel considéré.

4. Méthode selon l'une des revendications 1 à 3, selon laquelle à l'étape a), on détermine un moment prévu pour la détermination suivante de la valeur du paramètre individuel en fonction des valeurs du paramètre individuel déterminées précédemment.

5. Méthode selon l'une des revendications 1 à 4, selon laquelle, à l'étape a), le moment de la détermination suivante d'une valeur du paramètre individuel est déterminé en tenant compte d'un modèle d'évolution dans le temps de la valeur de ce paramètre individuel.

6. Méthode selon l'une des revendications 1 à 5, selon laquelle, à l'étape a), au moins une valeur de ladite pluralité de valeurs dudit paramètre individuel est mesurée par un capteur embarqué sur une monture de lunettes, et/ou à partir d'une ou plusieurs images capturées et/ou à l'aide d'un outil dédié et/ou à l'aide d'un questionnaire rempli par l'individu.

7. Méthode selon l'une des revendications 1 à 6, selon laquelle, à l'étape a), au moins une valeur de ladite pluralité de valeurs dudit paramètre individuel, correspondant à un moment donné, est estimée par un calcul en fonction de valeurs antérieures de ce paramètre individuel déterminées avant ce moment donné et d'un modèle d'évolution dans le temps de ce paramètre individuel.

8. Méthode selon la revendication 7, selon laquelle, à l'étape a), une autre valeur du paramètre individuel correspondant audit moment donné est déterminée par une mesure et selon laquelle lesdites deux valeurs mesurées et estimées de ce paramètre individuel sont prises en compte à l'étape b) pour déterminer la valeur recherchée du paramètre géométrique ou optique dudit équipement ophtalmique de compensation visuelle.

9. Méthode selon l'une des revendications 1 à 8, selon laquelle,
- à l'étape a), on détermine également une valeur d'au moins un paramètre de contrôle relatif à l'individu et on l'enregistre dans ladite base de données, en correspondance avec ladite au moins une valeur du paramètre individuel et l'indicateur temporel correspondant, et
- à l'étape b), on pondère l'importance de ladite au moins une valeur du paramètre individuel déterminé à l'étape a) en fonction de la valeur du paramètre de contrôle associée.

10. Méthode selon la revendication 9, selon laquelle, une pluralité de valeur du paramètre individuel étant déterminée à l'étape a),
- à l'étape b), on pondère l'importance de chaque valeur dudit paramètre individuel déterminée à l'étape a) en fonction de l'évolution dans le temps de ce paramètre de contrôle.

11. Méthode selon l'une des revendications 9 et 10, selon laquelle, ledit paramètre de contrôle comprend un paramètre physiologique et/ou un paramètre morphologique et/ou un paramètre comportemental et/ou un paramètre neuro-cognitif et/ou un paramètre psychologique et/ou un paramètre objectif ou subjectif relatif à un équipement ophtalmique de l'individu.

12. Méthode selon l'une des revendications 1 à 11, selon laquelle, à l'étape b), ledit au moins un paramètre géométrique ou optique de l'équipement de compensation visuelle déterminé comprend un paramètre géométrique ou optique d'une lentille ophtalmique de l'équipement et/ou un paramètre géométrique de la monture de l'équipement.

## Patentansprüche

1. Verfahren, das mit einer Rechnereinheit durchgeführt wird, zur Ermittlung einer progressiven ophthalmischen Einrichtung zur personalisierten visuellen Kompensation für eine Person, wobei die progressive ophthalmische Einrichtung dazu bestimmt ist, hergestellt zu werden, bei dem die folgenden Schritte ausgeführt werden:
a) in einer ersten Datenerfassungsphase wird eine Mehrzahl von Werten mindestens eines individuellen Parameters der Person ermittelt, umfassend mindestens einen Wert des individuellen Parameters, der zu mindestens einem ersten Zeitpunkt vor dem Auftreten der Presbyopie dieser Person ermittelt wird, und mindestens einen zweiten und einen dritten Wert des individuellen Parameters, die zu einem auf den ersten Zeitpunkt folgenden zweiten und einem dritten Zeitpunkt ermittelt werden, wobei mindestens einer unter dem zweiten Zeitpunkt und dem dritten Zeitpunkt nach dem Auftreten der Presbyopie dieser Person liegt, und wird jeder Wert des individuellen Parameters des Trägers dieser Mehrzahl von Werten in einer Datenbank gespeichert, jeder in Entsprechung zu einem zugeordneten Zeitindikator,
b) in einem zweiten Schritt zur Ermittlung einer progressiven ophthalmischen Einrichtung zur personalisierten visuellen Kompensation wird ein angestrebter Wert mindestens eines geometrischen oder optischen Parameters der progressiven ophthalmischen Einrichtung zur visuellen Kompensation unter Berücksichtigung des im Schritt a) ermittelten mindestens einen Werts des individuellen Parameters und des zugeordneten Zeitindikators und unter Berücksichtigung des zeitlichen Verlaufs der Werte der Mehrzahl von im Schritt a) ermittelten Werten des individuellen Parameters bestimmt,
im Schritt a) umfasst der individuelle Parameter einen Verhaltensparameter, der gewählt ist unter: einem Auge/Kopf-Koeffizienten, einem Senkwinkel des Blicks, Leseabstand, einer Blickrichtung während einer Sehaufgabe, einer Haltung während einer Sehaufgabe, einem Hauptsehbereich einer getragenen Linse oder bei einer von der Person ausgeübten Tätigkeit,
im Schritt b) bezieht sich der geometrische oder optische Parameter auf eine progressive ophthalmische Linse der progressiven ophthalmischen Einrichtung und ist gewählt unter: einer Addition der Linse, einer Position einer Nah- und/oder Fernsicht an der zugeschnittenen Linse, einem Inset der Linse oder einer Härte der Linse.

2. Verfahren nach Anspruch 1, bei dem im Schritt a) die unterschiedlichen ersten, zweiten und dritten Zeitpunkte paarweise um mindestens vierundzwanzig Stunden getrennt sind.

3. Verfahren nach einem der Ansprüche 1 und 2, bei dem die unterschiedlichen ersten, zweiten und dritten Zeitpunkte um eine in Abhängigkeit von dem betrachteten individuellen Parameter definierte Dauer zeitlich beabstandet sind.

4. Verfahren nach einem der Ansprüche 1 bis 3, bei dem im Schritt a) ein vorgesehener Zeitpunkt für die folgende Ermittlung des Werts des individuellen Parameters in Abhängigkeit von den zuvor ermittelten Werten des individuellen Parameters ermittelt wird.

5. Verfahren nach einem der Ansprüche 1 bis 4, bei dem im Schritt a) der Zeitpunkt der folgenden Ermittlung eines Werts des individuellen Parameters unter Berücksichtigung eines Modells des zeitlichen Verlaufs des Werts dieses individuellen Parameters ermittelt wird.

6. Verfahren nach einem der Ansprüche 1 bis 5, bei dem im Schritt a) mindestens ein Wert der Mehrzahl von Werten des individuellen Parameters durch einen in eine Brillenfassung integrierten Sensor und/oder ausgehend von einem oder mehreren aufgenommenen Bildern und/oder mithilfe eines dedizierten Instruments und/oder mithilfe eines von der Person ausgefüllten Fragebogens gemessen wird.

7. Verfahren nach einem der Ansprüche 1 bis 6, bei dem im Schritt a) mindestens ein Wert der Mehrzahl von Werten des individuellen Parameters, der einem gegebenen Zeitpunkt entspricht, durch eine Berechnung in Abhängigkeit von früheren Werten dieses individuellen Parameters, die vor diesem gegebenen Zeitpunkt ermittelt wurden, und von einem Modell des zeitlichen Verlaufs dieses individuellen Parameters geschätzt wird.

8. Verfahren nach Anspruch 7, bei dem im Schritt a) ein anderer Wert des individuellen Parameters, der dem gegebenen Zeitpunkt entspricht, durch eine Messung ermittelt wird und bei dem die beiden gemessenen und geschätzten Werte dieses individuellen Parameters im Schritt b) berücksichtigt werden, um den angestrebten Wert des geometrischen oder optischen Parameters der ophthalmischen Einrichtung zur visuellen Kompensation zu ermitteln.

9. Verfahren nach einem der Ansprüche 1 bis 8, bei dem:
- im Schritt a) auch ein Wert mindestens eines Kontrollparameters bezüglich der Person ermittelt wird und in der Datenbank in Entsprechung zu dem mindestens einen Wert des individuellen Parameters und dem entsprechenden Zeitindikator gespeichert wird, und
- im Schritt b) die Bedeutung des mindestens einen Werts des im Schritt a) ermittelten individuellen Parameters in Abhängigkeit von dem zugeordneten Wert des Kontrollparameters gewichtet wird.

10. Verfahren nach Anspruch 9, bei dem, wenn im Schritt a) eine Mehrzahl von Werten des individuellen Parameters ermittelt wird,
- im Schritt b) die Bedeutung jedes im Schritt a) ermittelten Werts des individuellen Parameters in Abhängigkeit von dem zeitlichen Verlauf dieses Kontrollparameters gewichtet wird.

11. Verfahren nach einem der Ansprüche 9 und 10, bei dem der Kontrollparameter einen physiologischen Parameter und/oder einen morphologischen Parameter und/oder einen Verhaltensparameter und/oder einen neuro-kognitiven Parameter und/oder einen psychologischen Parameter und/oder einen objektiven oder subjektiven Parameter bezüglich einer ophthalmischen Einrichtung der Person umfasst.

12. Verfahren nach einem der Ansprüche 1 bis 11, bei dem im Schritt b) der mindestens eine ermittelte geometrische oder optische Parameter der Einrichtung zur visuellen Kompensation einen geometrischen oder optischen Parameter einer ophthalmischen Linse der Einrichtung und/oder einen geometrischen Parameter der Fassung der Einrichtung umfasst.

## Claims

1. Method, implemented by virtue of a computational unit, for determining an item of visual-compensation progressive ophthalmic equipment personalized for an individual, said item of progressive ophthalmic equipment being intended to be manufactured, wherein the following steps are carried out:
a) in a data-acquiring first phase, a plurality of values of at least one individual parameter of said individual is determined, said plurality of values comprising at least one value of said individual parameter determined at at least one first moment preceding the appearance of the presbyopia of this individual, and at least one second and one third values of said individual parameter, which are determined at a second and a third moments that follow said first moment, at least one among the second moment and the third moment being after the appearance of the presbyopia of this individual, and each value of said individual parameter of the wearer of this plurality of values is recorded in a database, each in correspondence with an associated temporal indicator,
b) in a second step of determining the item of personalized visual-compensation progressive ophthalmic equipment, a sought-after value of at least one geometric or optical parameter of said item of visual-compensation progressive ophthalmic equipment is determined while taking into account said at least one value determined in step a) of said individual parameter and the associated temporal indicator and while taking into account the temporal variation in said values of the plurality of values, determined in step a), of the individual parameter,
in step a), said individual parameter comprises a behavioural parameter chosen from: a head-eye coefficient, a lowering angle of the gaze, a reading distance, a gaze direction during a visual task, a posture during a visual task, a zone of use of a lens worn or an activity performed by the individual,
in step b), said geometric or optical parameter relates to a progressive ophthalmic lens of the item of progressive ophthalmic equipment and is chosen from: an addition of the lens, a position of near and/or far vision on the trimmed lens, a progression length of the lens, an inset of the lens or a hardness of the lens.

2. Method according to Claim 1, wherein, in step a), said first, second and third different moments are separated pairwise by at least twenty-four hours.

3. Method according to one of Claims 1 and 2, wherein said first, second and third different moments are spaced apart in time by a duration defined depending on the individual parameter in question.

4. Method according to one of Claims 1 to 3, wherein, in step a), a moment provided for the following determination of the value of the individual parameter is determined depending on the precedingly determined values of the individual parameter.

5. Method according to one of Claims 1 to 4, wherein, in step a), the moment of the following determination of a value of the individual parameter is determined by taking into account a model of the variation over time in the value of this individual parameter.

6. Method according to one of Claims 1 to 5, wherein, in step a), at least one value of said plurality of values of said individual parameter is measured by a sensor integrated into a spectacle frame, and/or from one or more captured images and/or using a dedicated tool and/or using a questionnaire filled in by the individual.

7. Method according to one of Claims 1 to 6, wherein, in step a), at least one value of said plurality of values of said individual parameter, corresponding to a given moment, is estimated via a calculation dependent on prior values of this individual parameter determined before this given moment and on a model of the variation over time in this individual parameter.

8. Method according to Claim 7, wherein, in step a), another value of the individual parameter corresponding to said given moment is determined via a measurement and wherein said measured and estimated two values of this individual parameter are taken into account in step b) in order to determine the sought-after value of the geometric or optical parameter of said item of visual-compensation ophthalmic equipment.

9. Method according to one of Claims 1 to 8, wherein:
- in step a), a value of at least one control parameter relating to the individual is also determined and recorded in said database, in correspondence with said at least one value of the individual parameter and the corresponding temporal indicator, and
- in step b), the importance of said at least one value of the individual parameter determined in step a) is weighted depending on the value of the associated control parameter.

10. Method according to Claim 9, wherein, a plurality of values of the individual parameter being determined in step a),
- in step b), the importance of each value, determined in step a), of said individual parameter is weighted depending on the variation over time in this control parameter.

11. Method according to one of Claims 9 and 10, wherein said control parameter comprises a physiological parameter and/or a morphological parameter and/or a behavioural parameter and/or a neuro-cognitive parameter and/or a psychological parameter and/or an objective or subjective parameter relating to an item of ophthalmic equipment of the individual.

12. Method according to one of Claims 1 to 11, wherein, in step b), said at least one geometric or optical parameter of the determined item of visual-compensation equipment comprises a geometric or optical parameter of an ophthalmic lens of the item of equipment and/or a geometric parameter of the frame of the item of equipment.
